# EUROPEAN PATENT APPLICATION

(11) **EP 3 228 954 A2**
(43) Date of publication of application: **11.10.2017**
(21) Application number: 17165170.6
(22) Date of filing: 06.04.2017
(51) Int. Cl.: F25B 13/00, F25B 25/00, F25B 49/02

(54) **COOLING APPARATUS**

(30) Priority: 06.04.2016 JP 2016076491
(71) Applicant: Hitachi-Johnson Controls Air Conditioning, Inc., Tokyo 105-0022 (JP)
(72) Inventor: AOYAGI, Atsuki, Tokyo, 105-0022 (JP); ISHIKI, Yoshikazu, Tokyo, 105-0022 (JP); ITO, Koji, Tokyo, 105-0022 (JP); HIGUCHI, Koshi, Tokyo, 105-0022 (JP); SUGIYAMA, Fumihiko, Tokyo, 105-0022 (JP)
(74) Representative: MERH-IP Matias Erny Reichl Hoffmann Patentanwälte PartG mbB

(57) **Abstract**

A cooling apparatus includes a compressor 10, an airside heat exchanger 11, an expansion valve 12, and a usage-side heat exchanger 5, which are sequentially connected by a refrigerant pipe 6. In addition, the cooling apparatus includes a first valve 13 which is provided between the airside heat exchanger 11 and the expansion valve 13; a bypass circuit 15 for a pump operation cycle which bypasses the first valve 13 and which includes a refrigerant circulation pump 14; a compressor bypass circuit 18 which bypasses the compressor 10; and a second valve 19 which is provided in the compressor bypass circuit 18. A plurality of refrigeration cycles are provided which switch a compressor operation cycle which drives the compressor 10 and operates as a state where the first valve 13 is opened and a state where the second valve 19 is closed and a pump operation cycle which drives the refrigerant circulation pump 14 and operates as a state where the first valve 13 is closed and a state where the second valve 19 is opened, and the plurality of refrigeration cycles are disposed on an upstream side and a downstream side in a flow direction of a cooling medium.

## Description

### BACKGROUND OF THE INVENTION

### FIELD OF THE INVENTION

The present invention relates to a cooling apparatus for producing cold water or the like.

### BACKGROUND ART

As a cooling apparatus for producing cold water or the like, there is a water cooling apparatus (chiller unit) which produces cold water by a refrigeration cycle using a compressor or the like.

In addition, as described in JP-A-2014-70753, an air conditioning device which performs both a compressor cycle operation using a compressor and a pump cycle operation using a refrigerant circulation pump are known.

### SUMMARY OF THE INVENTION

In the water cooling apparatus described above, in a case where a constant temperature (constant water temperature) is required from a cooled load side, it is necessary to supply cold water at a constant temperature regardless of the change in an outside air temperature.

Generally, when the outside air temperature decreases, efficiency of a refrigeration device improves. However, since it is necessary to keep differential pressure and pressure ratio during an operation thereof at a certain level or more due to the structure of the compressor, lubricating, or the like, it is necessary to intentionally decrease condensation capacity and perform an operation to keep pressure at a certain high pressure even in a state where the outside air temperature is low. Therefore, there is a problem that the effect of reducing power consumption is not sufficient.

On the other hand, the device of JP-A-2014-70753 is configured to compare an indoor air temperature and the outside air temperature with each other, and to be capable of being switched between a compressor cycle operation using a compressor and a pump cycle operation using a refrigerant circulation pump and thus the indoor air temperature is controlled. In a case where the outside air temperature is low, the power consumption reduction effect can be obtained by the pump cycle operation being performed.

However, the device of JP-A-2014-70753, is an air conditioning device for controlling the indoor air temperature, and does not take into consideration a cooling apparatus for producing cold water or the like. In the cooling apparatus which produces cold water or the like, because water, brine, or the like is required to be cooled to 10°C or less (for example, 5°C to 10°C), in a case where water or the like is cooled by a pump cycle operation using a refrigerant circulation pump, an operation thereof is possible only in cases where a condenser side temperature (outside air temperature) is lower than an evaporator side temperature (cold water temperature), and where temperature difference between the condenser side temperature and the evaporator side temperature is somewhat large. In other words, if there is no a large temperature difference between the condenser side temperature and the evaporator side temperature at some extent, water or the like cannot be cooled to the target temperature or it takes a long time to cool.

Therefore, conditions that can be used in the cooling apparatus for producing cold water or the like are very limited, and there is a problem that the power consumption of the cooling apparatus cannot be sufficiently reduced.

In addition, in the cooling apparatus for producing cold water or the like, although it is necessary to be taken into consideration for reliability such as prevention of freezing of cold water, in the device of JP-A-2014-70753 described above, there is no consideration for reliability such as prevention of freezing.

An object of the present invention is to provide a cooling apparatus capable of improving the effect of reducing power consumption.

Another object of the present invention is to provide a cooling apparatus capable of improving reliability.

In order to achieve the object described above, according to a first aspect of the present invention, there is provided a cooling apparatus, including a compressor, an air-side heat exchanger, an expansion valve, and a usage-side heat exchanger, which are sequentially connected by a refrigerant pipe; a first valve which is provided between the air-side heat exchanger and the expansion valve; a bypass circuit for a pump operation cycle which bypasses the first valve and which includes a refrigerant circulation pump; a compressor bypass circuit which bypasses the compressor; and/or a second valve which is provided in the compressor bypass circuit. A plurality of refrigeration cycles are provided which switch a compressor operation cycle which drives the compressor and operates as a state where the first valve is opened and a state where the second valve is closed and a pump operation cycle which drives the refrigerant circulation pump and operates as a state where the first valve is closed and a state where the second valve is opened, and the plurality of refrigeration cycles are disposed on an upstream side and a downstream side in a flow direction of a cooling medium, and the cooling medium flows into the usage-side heat exchanger of the refrigeration cycle disposed on the upstream side to be cooled and then flows into the usage-side heat exchanger of the refrigeration cycle disposed on the downstream side to be cooled.

According to a second aspect of the present invention, there is provided a cooling apparatus, including a compressor, an air-side heat exchanger, an expansion valve, and a usage-side heat exchanger, which are sequentially connected by a refrigerant pipe; a first valve which is provided between the air-side heat exchanger and the expansion valve; a bypass circuit for a pump operation cycle which bypasses the first valve and which includes a refrigerant circulation pump; a compressor bypass circuit which bypasses the compressor; a second valve which is provided in the compressor bypass circuit; a temperature detector for detecting a temperature of a refrigerating machine oil in an inside portion of the compressor; and/or a heating heater which controls so as to increase the temperature of the refrigerating machine oil in the inside portion of the compressor based on the temperature detected by the temperature detector. The cooling apparatus is configured to switch a compressor operation cycle which drives the compressor and operates as a state where the first valve is opened and a state where the second valve is closed and a pump operation cycle which drives the refrigerant circulation pump and operates as a state where the first valve is closed and a state where the second valve is opened, and is configured to gasify a liquid refrigerant in the inside portion of the compressor by controlling the heating heater based on the temperature of the refrigerating machine oil detected by the temperature detector during an operation in the pump operation cycle.

According to a third aspect of the present invention, there is provided a cooling apparatus, including a compressor, an air-side heat exchanger, an expansion valve, and a usage-side heat exchanger, which are sequentially connected by a refrigerant pipe; a first valve which is provided between the air-side heat exchanger and the expansion valve; a bypass circuit for a pump operation cycle which bypasses the first valve and which includes a refrigerant circulation pump; a compressor bypass circuit which bypasses the compressor; a second valve which is provided in the compressor bypass circuit; a blower for blowing air to the air-side heat exchanger; and/or a refrigerant temperature detector for detecting a refrigerant inlet-side temperature to the usage-side heat exchanger. The cooling apparatus is configured to switch a compressor operation cycle which drives the compressor and operates as a state where the first valve is opened and a state where the second valve is closed and a pump operation cycle which drives the refrigerant circulation pump and operates as a state where the first valve is closed and a state where the second valve is opened, and is configured to prevent freezing of a cooling medium flowing through the usage-side heat exchanger by controlling the blower which blows air to the air-side heat exchanger based on a refrigerant temperature on the inlet side of the usage-side heat exchanger detected by the refrigerant temperature detector during an operation in the pump operation cycle.

According to the first aspect or the second aspect of the invention, a cooling apparatus which can improves the effect of reducing power consumption is provided.

According to the third aspect, a cooling apparatus of the invention which can improve reliability is provided.

### BRIEF DESCRIPTION OF THE DRAWINGS

Fig. 1 is a configuration diagram of a refrigeration cycle illustrating Example 1 of a cooling apparatus of the invention.
Fig. 2 is a configuration diagram of a refrigeration cycle illustrating Example 2 of the cooling apparatus of the invention.
Fig. 3 is a configuration diagram of a refrigeration cycle illustrating Example 3 of the cooling apparatus of the invention.

### DETAILED DESCRIPTION OF THE INVENTION

Hereinafter, specific examples of the invention will be described based on the drawings. In each drawing, portions denoted by the same reference numerals show the same or corresponding portions.

### Example 1

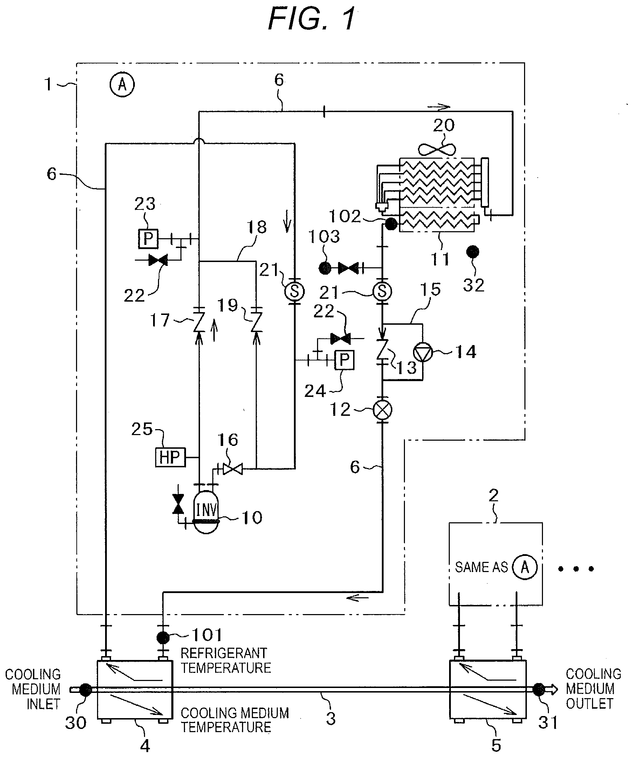

Example 1 of a cooling apparatus of the invention will be described with reference to Fig. 1. Fig. 1 is a configuration diagram of a refrigeration cycle illustrating Example 1.

In Fig. 1, reference numerals 1 and 2 are refrigeration cycles (refrigerating machines), and since the refrigeration cycle 1 and the refrigeration cycle 2 have the same internal configuration, the configuration of the refrigeration cycle 1 will be described in detail, and the description of the internal configuration of refrigeration cycle 2 will be omitted.

In addition, reference numeral 3 is a flow path through which a cooling medium such as water or brine (including brine or the like other than water, hereinafter also referred to as "water") flows, a usage-side heat exchanger (being evaporator in the present example, hereinafter also referred to as "evaporator") 4 of the refrigeration cycle 1 is provided on an upstream side of the flow path, and a usage-side heat exchanger (evaporator) 5 of the refrigeration cycle 2 is provided on a downstream side thereof. The cooling medium introduces from an inlet (cold water inlet) of the cooling medium into the evaporator 4 on the upstream side to be cooled by exchanging heat with a refrigerant flowing through the refrigeration cycle 1, further flows into the evaporator 5 on the downstream side to be further cooled, and cold water having a predetermined temperature is supplied from a cold water outlet to a demand destination such as a fan coil unit.

As described above, in the present example, the evaporators (usage-side heat exchangers) 4 and 5 of the refrigeration cycle 1 and the refrigeration cycle 2 are disposed in series with respect to the cooling medium flow path 3 through which the cooling medium flows. In the example, although the evaporators of the two refrigeration cycles are disposed in series with respect to one cooling medium flow path 3, only one evaporator of the refrigeration cycle may be disposed with respect to one cooling medium flow path 3. In addition, only one evaporator may be disposed with respect to one cooling medium flow path 3, and two refrigeration cycles may share one evaporator, further, three or more refrigeration cycles may be provided and those evaporators may be disposed in series with respect to one cooling medium flow path 3 or three or more refrigeration cycles may share one evaporator.

In the present example, a plate-type heat exchanger is used as the evaporators 4 and 5. In the plate-type heat exchanger, a liquid refrigerant flows into the lower side, and the refrigerant gasified by exchanging heat with the cooling medium flows out from the upper side. On the other hand, the cooling medium is configured to be countercurrent to the refrigerant. However, the evaporators 4 and 5 are not limited to the configuration.

Next, the internal configuration of the refrigeration cycle 1 described above will be described.

The refrigeration cycle 1 of the present example is configured so as to be capable of performing a compressor operation cycle which drives a compressor to perform a refrigeration cycle operation and a pump operation cycle which drives a refrigerant circulation pump to perform a refrigeration cycle operation and these operation cycles are configured to be selected and executed according to an outside air temperature and magnitude of load.

In Fig. 1, reference numeral 10 is a compressor, reference numeral 11 is a condenser (air-side heat exchanger), and reference numeral 12 is an expansion valve, and a compressor 10, a condenser 11, an expansion valve 12, and the evaporator 4 are sequentially connected by the refrigerant pipe 6, and a refrigeration cycle operation (compressor operation cycle) is configured to perform by driving the compressor 10. The number of the compressor 10 is not limited to one, and a plurality of the compressors 10 may be provided in parallel.

In addition, a check valve (first valve) 13 which allows flow only to the expansion valve 12 is provided between the condenser (air-side heat exchanger) 11 and the expansion valve 12, and a bypass circuit 15 for the pump operation cycle which bypasses the check valve 13 and includes a refrigerant circulation pump 14 is also provided. One end of the bypass circuit 15 for the pump operation cycle is connected to the refrigerant pipe 6 between the condenser 11 and the check valve 13 and the other end thereof is connected to the refrigerant pipe 6 between the check valve 13 and the expansion valve 12, respectively.

On the other hand, an electromagnetic valve (two-way valve) 16 is provided in the refrigerant pipe 6 on an upstream side (suction side) of the compressor 10, and a check valve 17 which allows flow only to the condenser 11 side is provided in the refrigerant pipe 6 on the downstream side (discharge side) of the compressor 10. In addition, a compressor bypass circuit 18 is provided so as to connect the refrigerant pipe 6 on an upstream side (between electromagnetic valve 16 and evaporator 4) of the electromagnetic valve 16 and the refrigerant pipe 6 on a downstream side (between check valve 17 and condenser 11) of the check valve 17 to each other and to bypass the compressor 10. The compressor bypass circuit 18 is provided with a check valve (second valve) 19 which allows flow only to the condenser 11 side.

In a case where the compressor operation cycle is performed, the compressor is operated (refrigerant circulation pump 14 is stopped) as a state where the check valve (first valve) 13, the electromagnetic valve 16, and the check valve 17 are opened and a state where the check valve (second valve) 19 is closed. In other words, the refrigerant compressed and discharged by the compressor 10 passes through the check valve 17 and then introduces into the condenser 11 to condense by exchanging heat with the outdoor air. Then the condensed refrigerant passes through the check valve 13, is decompressed by the expansion valve 12 to become a low temperature and low pressure refrigerant, is introduced into the evaporator 4 to cool the cooling medium. Thereafter the refrigerant is evaporated, passes through the electromagnetic valve 16, and then is sucked to the compressor 10 to be compressed again, and thus the refrigeration cycle is repeated.

Although the check valves (valves for preventing backflow of refrigerant) 13, 17, and 19 are not valves for controlling opening and closing, since, instead of check valves, open and close valves such as electromagnetic valves may be opened and closed to an open state or a close state, expressions of the open state and the close state are used considering a case of using the open and close valves instead of the check valves.

In a case of performing the pump operation cycle, the check valve (first valve) 13, the electromagnetic valve 16 and the check valve 17 are in the close state, the check valve (second valve) 19 is in the open state, the compressor 10 is stopped, and the refrigerant circulation pump (hereinafter simply referred to as pump) 14 is driven. By the pump 14 being driven, the refrigerant which is exchanged heat with outdoor air to condense by the condenser 11 is sent to the downstream side via the pump 14, and passes through the expansion valve 12 in a fully open state, for example and flows into the evaporator 4. By the evaporator 4, the refrigerant cools the cooling medium, evaporates by itself, passes from the compressor bypass circuit 18 through the check valve (second valve) 19 in the open state, flows into the condenser 11, exchanges heat with the outdoor air to condense again, and then is sucked to the pump 14 from the bypass circuit 15 for the pump operation cycle, and thus the refrigeration cycle is repeated.

The refrigeration cycle 2 also has the same configuration and performs the same operation.

In Fig. 1, reference numeral 20 is a blower for blowing outdoor air to the condenser 11, reference numeral 21 is a strainer which removes foreign matter, reference numeral 22 is a service valve which is used at the time of maintenance or the like, reference numeral 23 is a pressure sensor on a high pressure side, reference numeral 24 is a pressure sensor on a low pressure side, and reference numeral 25 is a high pressure shut-off device for stopping the compressor 10 when discharge-side pressure of the compressor 10 abnormally rises.

In addition, in the present example, a refrigerant temperature detector 101 which detects a refrigerant temperature flowing into the evaporator 4, a cooling medium inlet temperature detector 30 which detects a temperature of the cooling medium flowing into the evaporator 4 on the upstream side, and a cooling medium outlet temperature detector 31 which detects the temperature of the cooling medium flowing out from the evaporator 5 on the downstream side, are provided.

During an operation in the pump operation cycle, a control device (not illustrated) provided in the refrigeration cycle 1 is configured to prevent the cooling medium from freezing by controlling the rotation speed of the blower 20, based on the refrigerant temperature detected by the temperature detectors 101, 30, and 31 or at least the refrigerant temperature detector 101.

In addition, in the present example, a refrigerant temperature detector 102 which detects a refrigerant temperature on an outlet side of the condenser 11 and a pressure sensor 103 which detects the refrigerant pressure on the outlet side of the condenser 11 are provided. During an operation in the pump operation cycle, it is determined by the control device that whether or not gas is mixed into the refrigerant flowing through the outlet side of the condenser 11 (whether or not the refrigerant is sufficiently liquefied) from the refrigerant temperature detected by the refrigerant temperature detector 102 on the outlet side of the condenser and the pressure detected by the pressure sensor 103 on the outlet side of the condenser. In a case where it is determined that the gas is mixed, the control device controls the rotation speed of the blower 20 or controls opening degree of the expansion valve 12 to sufficiently liquefy the refrigerant so that the gas mixing is not generated.

In addition, in the present example, in a case where it is determined that gas is mixed in the refrigerant as a result of the determination by the control device, the control device controls so as to restrict the operation of the refrigerant circulation pump 14. For example, if the operation of the pump 14 is not started, the operation start thereof is restricted, and if the pump 14 is in operation, the operation thereof is controlled to be stopped so that an air inclusion operation due to gas mixing is prevented.

As described above, in the present example, the air inclusion operation generated by the gas being mixed into the refrigerant sucked into the refrigerant circulation pump 14 can be prevented by sufficiently liquefying the refrigerant on the downstream side of the condenser 11. Therefore, the failure of the refrigerant circulation pump 14 can be suppressed and reliability thereof can be improved.

An outside air temperature detector 32 which detects the outside air temperature is also provided on the suction side of the outdoor air of the condenser 11. The outside air temperature detector 32 is not necessary to be provided in each of the refrigeration cycles 1 and 2 and may be provided in one representative refrigeration cycle (refrigeration cycle 1 in the example).

Although not illustrated, the cooling medium flow path 3 also includes a pump for circulating a cooling medium, a strainer for preventing mixing of foreign matter, a check valve for preventing backflow, and the like and these devices are unitized and installed on an upstream side of the cooling medium flow path 3, or these devices may be installed in a cabinet which accommodates the refrigeration cycle 1 or the like, for example.

In addition, in the bypass circuit 15 for the pump operation cycle, an electromagnetic valve is also provided on the suction side of the refrigerant circulation pump 14, and if the electromagnetic valve is configured to be closed during an operation in the compressor operation cycle, since the refrigerant can be prevented from passing through the refrigerant circulation pump 14, the efficiency thereof is further improved.

In the present example, the compressor 10, the refrigerant circulation pump 14, and the blower 20 are changed in revolution speed by an inverter, the expansion valve 12 is also configured by an electronic expansion valve which can control the opening degree, and thus follow ability with respect to load and stability of the refrigeration cycle can be improved. However, the invention is not limited to these configurations, and a constant-speed compressor 10 or a constant-speed pump 14 can be used, for example.

Next, the operation of the cooling apparatus of Example 1 illustrated in Fig. 1 will be described.

In a case where the compressor operation cycle is performed, the electromagnetic valve 16 provided on the suction side of the compressor 10 is opened to drive the compressor 10. The high temperature and high pressure refrigerant gas discharged from the compressor 10 flows into the condenser 11 and the outdoor air which is blown to the condenser 11 by the blower 20 and the refrigerant flowing into the condenser 11 exchange heat with each other and thus the refrigerant is condensed. During the operation in the compressor operation cycle, the refrigerant circulation pump 14 is stopped.

The refrigerant condensed by the condenser 11 is decompressed and expanded by the expansion valve 12, is a low-temperature and low-pressure two-phase refrigerant, and flows into the evaporator 4.

On the other hand, the cooling medium is supplied to a fan coil unit or the like to cool the load (not illustrated), and the temperature-increased cooling medium flows into the evaporator 4 via the cooling medium flow path 3. In the evaporator 4, the refrigerant and the cooling medium exchange heat with each other so that the cooling medium is cooled by being deprived of heat by the refrigerant, the refrigerant evaporates to become refrigerant gas, passes through the electromagnetic valve 16 in an open state, and then is sucked into the compressor 10 again, and thus the refrigeration cycle operation is repeated.

The refrigeration cycle 2 also operates similarly. In a case where the load is small, only one of the refrigeration cycles 1 and 2 may be operated, and the other thereof may be stopped.

The cooling apparatus of the present example is configured so as to also perform cooling operation by a pump operation cycle by driving the refrigerant circulation pump 14. The pump operation cycle is performed in a case where the outside air temperature detected by the outside air temperature detector 32 is lower than the set temperature on the cooling medium outlet side. In other words, this is because it is possible to cool the refrigerant by the outside air instead of the compressor operation cycle and to cool the cooling medium by refrigerant circulation performed by the refrigerant circulation pump 14, under the condition that the condensation temperature is lower than the evaporation temperature during the cooling operation.

In a case where such a condition is satisfied, the compressor 10 is stopped and the electromagnetic valve 16 on the suction side of the compressor is also closed as not the compressor operation cycle but the pump operation cycle described above. The electromagnetic valve 16 may be linked with the start and stop of the compressor 10 and opened and closed with a certain time lag. By closing the electromagnetic valve 16, the refrigerant flow into the compressor 10 can be prevented and the refrigerant stagnation into the refrigerating machine oil staying in the compressor 10 can be prevented in a case where the pump operation cycle is performed.

The operation of the pump operation cycle will be described. In a state where the compressor 10 is stopped and the electromagnetic valve 16 is closed, the refrigerant circulation pump 14 is driven. In the condenser 11, the outdoor air blown by the blower 20 and the refrigerant exchange heat with each other, the low temperature liquid refrigerant cooled and condensed is sucked into the refrigerant circulation pump 14 via the bypass circuit 15, is sent to a side of the expansion valve 12, passes through the expansion valve 12 in a fully open state, for example, and then flows into the evaporator 4.

On the other hand, the cooling medium which is cooled the load and rise in temperature flows into the evaporator 4 via the cooling medium flow path 3. In the evaporator 4, the low-temperature liquid refrigerant and the cooling medium exchange heat with each other, the cooling medium is cooled by being deprived of heat by the refrigerant, the refrigerant evaporates into refrigerant gas, flows out from the evaporator 4, flows into the compressor bypass circuit 18, passes through the check valve 19, and then flows into the condenser 11. In the condenser 11, the refrigerant gas exchanges heat with the outdoor air again to condense, becomes a liquid refrigerant, and then the liquid refrigerant again flows into the refrigerant circulation pump 14, and thus the refrigeration cycle is repeated.

The cooling medium cooled by the evaporator 4 is controlled to a target temperature. Therefore, the refrigerant circulation pump 14 is configured to control the rotation speed by the inverter, and even under the operation condition of only the pump operation cycle, the capacity can be controlled according to the target set temperature of the cooling medium.

In addition, in the pump operation cycle in a case where the outside air temperature is low, the temperature of the heat-exchanged refrigerant in the condenser 11 is about the same as the outside air temperature. In a case where water is used as the cooling medium, it is necessary to provide freezing protection by the evaporator 4.

In the present example, the refrigerant temperature detector 101 is provided on the refrigerant inlet side of the evaporator 4, and the rotation speed of the blower 20 of the condenser 11 is controlled according to the refrigerant temperature detected by the refrigerant temperature detector 101 so as to prevent the cooling medium from freezing. Specifically, in a case where the outside air temperature is 0°C or less, degree of super cooling in the condenser 11 is controlled so as not to be excessive by the rotation speed of the blower 20 being decreased. Antifreeze can also be used as the cooling medium, and in this case, the refrigerant temperature is controlled so as not to be equal to or lower than the freezing temperature of the antifreeze.

In the refrigerant circulation pump 14, it is necessary to reliably suck the liquid refrigerant, and it is necessary to reduce the risk of failure due to surging (air inclusion operation) or the like generated by gas mixing in the liquid refrigerant. Therefore, in the present example, the refrigerant temperature detector 102 which detects the refrigerant temperature on the outlet side of the condenser 11 and the pressure sensor 103 which detects the pressure are provided, and the refrigerant state on the outlet side of the condenser 11 is determined from the detected value in each sensor by a control device or the like provided in the refrigeration cycle 1. If the refrigerant state determined by the control device is a gas rich, the control device controls not to operate the refrigerant circulation pump 14 or to stop the refrigerant circulation pump 14 if being in operation.

In addition, at the operation start or the like, it is necessary to suck the liquid refrigerant from the condenser 11 by the same consideration. Therefore, at the operation start, by the opening degree of the expansion valve 12 being decreased and resistance being generated, the liquid refrigerant may be controlled to be collected from the condenser 11 and to make a trigger for sucking the liquid refrigerant of the refrigerant circulation pump 14.

In a case where it is determined that the operation capacity is insufficient only by the pump operation cycle depending on the magnitude of the load, that is, during the operation of the refrigeration cycles 1 and 2 in the pump operation cycle, the refrigeration cycle 1 installed on the upstream side of the cooling medium flow path 3 is operated as a pump operation cycle, and the refrigeration cycle 2 installed on the downstream side of the cooling medium flow path 3 is operated as a compressor operation cycle. Accordingly, combination effect of promotion of stability of the supply temperature of the cooling medium and enhancement of the energy saving of the pump operation cycle and the compressor operation cycle can be achieved.

In other words, since the temperature of the cooling medium is high in the refrigeration cycle 1 on the upstream side, the temperature difference between the refrigerant and the cooling medium can be increased so that the cooling medium can be further efficiently cooled even in the pump operation cycle. In addition, since the refrigeration cycle 2 on the downstream side operates in the compressor operation cycle, it can be controlled to a proper refrigerant temperature regardless of the outside air temperature, so that heat of the cooling medium which is cooled in the refrigeration cycle 1 and of which a temperature is decreased also can be efficiently exchanged.

Accordingly, the refrigeration cycle 1 on the upstream side and the refrigeration cycle 2 on the downstream side are used by being properly selected and switched according to the outside air temperature and the magnitude of the load so that the compressor operation cycle and the pump operation cycle can save energy and the cooling medium temperature can also quickly reach to the target temperature. In other words, in a case where the outside air temperature detected by the outside air temperature detector 32 is lower than the target temperature of the cooling medium on the outlet side of the evaporator 5, the operations of the compressor operation cycle and of the pump operation cycle may be properly selected and operated according to the difference between the cooling medium temperature detected by the cooling medium outlet temperature detector 31 and the outside air temperature.

For example, in a case where the temperature difference between the outside air temperature detected by the outside air temperature detector 32 and the cooling medium temperature detected by the cooling medium outlet temperature detector 31 is 10°C or more, it is determined that operation is possible in the pump operation cycle and both refrigeration cycles 1 and 2 also operate in the pump operation cycle. In a case where the temperature difference is 10°C or less and 5°C or more, the refrigeration cycle 1 on the upstream side is operated as a pump operation cycle and the refrigeration cycle 2 on the downstream side is operated as a compressor operation cycle. In addition, in a case where the temperature difference between the outside air temperature and the cooling medium temperature detected by the cooling medium outlet temperature detector 31 is less than 5°C, both the refrigeration cycles 1 and 2 operate as a compressor operation cycle.

Instead of the cooling medium temperature detected by the cooling medium outlet temperature detector 31, the pump operation cycle and the compressor operation cycle in the refrigeration cycles 1 and 2 may be selected by the temperature difference between the inlet temperature of the cooling medium detected by the cooling medium inlet temperature detector 30 and the outside air temperature. In addition, for example, in a case where it is determined that the operation capacity is insufficient only in the pump operation cycle during operation of the refrigeration cycles 1 and 2 in the pump operation cycle, that is, in a case where it is determined that the temperature difference between the outside air temperature and the cooling medium temperature is small and the load is large, one or both of the refrigeration cycles 1 and 2 may be switched to the compressor operation cycle.

### Example 2

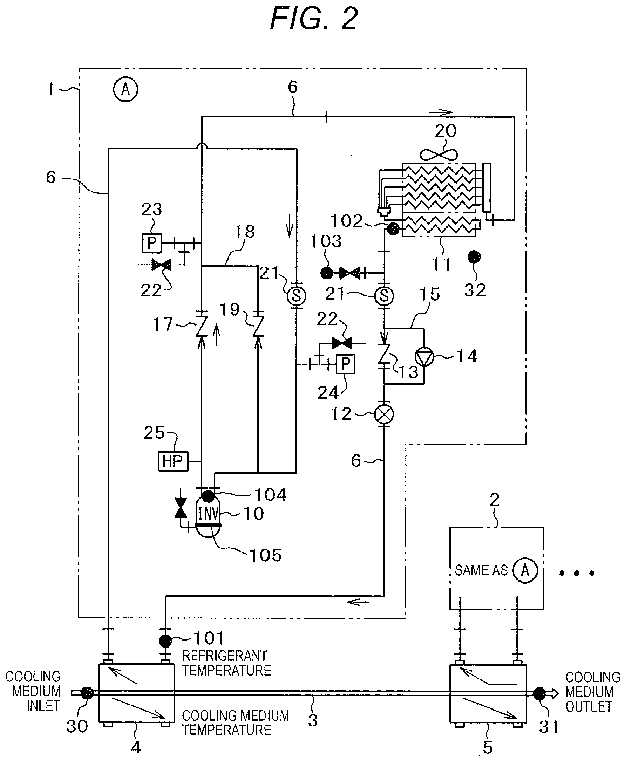

Example 2 of the cooling apparatus of the invention will be described with reference to Fig. 2. In Fig. 2, portions denoted the same reference numerals as those in Fig. 1 show the same or corresponding portions, and in description of the Example 2, portions different from those of Fig. 1 will be mainly described, and descriptions of similar portions as those of Example 1 described above will be omitted.

In Example 2 illustrated in Fig. 2, the electromagnetic valve 16 provided on the suction side of the compressor 10 in the Example 1 described above is eliminated, and instead thereof, a temperature detector 104 for detecting the temperature of the refrigerating machine oil in the inside portion of the compressor 10 and a heating heater 105 which controls the temperature of the refrigerating machine oil in the inside portion of the compressor 10 to rise based on the temperature detected by the temperature detector 104 are provided in the compressor 10. During the operation in the pump operation cycle, the heating heater 105 is controlled based on the temperature of the refrigerating machine oil in the compressor 10 detected by the temperature detector 104, and the liquid refrigerant stored in the refrigerating machine oil in the inside portion of the compressor is configured to be gasified.

In Example 2, since no electromagnetic valve is provided on the suction side of the compressor 10, it is considered that the gas refrigerant flows into the compressor 10 to some extent during operation in the pump operation cycle in which the compressor is not driven. Therefore, it is necessary that the refrigerant used in the pump operation cycle is prevented from decreasing by the refrigerant stagnating into the refrigerating machine oil staying in the compressor. Therefore, in the present example, decrease in the efficiency can be prevented in the pump operation cycle by heating the refrigerating machine oil by the heating heater 105 to raise the refrigerant temperature, gasifying the refrigerant which is stagnating into the refrigerating machine oil, and allowing the gasified refrigerant to flow out during the pump operation cycle.

In addition, according to the present example, since the electromagnetic valve 16 illustrated in Fig. 1 can be eliminated, it is not necessary for the refrigerant to pass through the electromagnetic valve 16 during operation in the compressor operation cycle, and the refrigerant passes through the electromagnetic valve and thus the pressure loss caused by the refrigerant passing through the electromagnetic valve can be reduced. Since electromagnetic valves generally have complicated flow paths, the resistance when passing through the refrigerant is large and a large pressure loss is generated. According to the present example, since the refrigerant does not pass through the electromagnetic valve during the operation in the compressor operation cycle, the flow path resistance is greatly reduced, the operation efficiency is greatly improved, and thus there is an effect that the power consumption can be reduced.

The description of Example 2 is common to the refrigeration cycle 1 and the refrigeration cycle 2. Since other configurations and operations are the same as those of Example 1 described above, the description thereof will be omitted. Also in the present example, the same effect as that of Example 1 can be obtained except for the effects described above.

As described above, a cooling apparatus which has high reliability and good load follow ability and can reduce power consumption can be obtained by a structure of the refrigeration device having a plurality of refrigeration cycles which can be switched between the compressor operation cycle and the pump operation cycle.

### Example 3

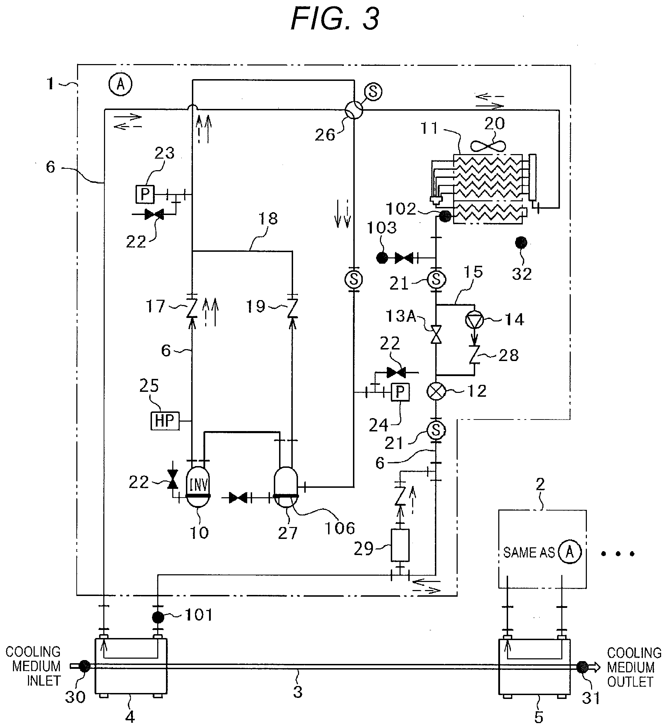

Next, Example 3 of the cooling apparatus of the invention will be described with reference to Fig. 3. In Fig. 3, portions denoted the same reference numerals as those in Fig. 1 and Fig. 2 show the same or corresponding portions, and in description of the Example 3, portions different from those of Fig. 1 will be mainly described, and descriptions of similar portions as those in Example 1 and Example 2 described above will be omitted.

Even in Example 3 illustrated in Fig. 3, the refrigeration cycle 1 and the refrigeration cycle 2 having the same internal configuration are provided as in Example 1 and Example 2, the refrigeration cycles 1 and 2 are disposed in series with respect to the cooling medium flow path 3 and in addition, refrigeration cycles 1 and 2 have functions of a compressor operation cycle and a pump operation cycle, respectively. The Example 3 is different from Example 1 and Example 2 in that the compressor operation cycle is configured so that not only the cooling operation but also the heating operation is possible.

In Fig. 3, reference numerals 1 and 2 are refrigeration cycles (refrigerating machines), and since the refrigeration cycle 1 and the refrigeration cycle 2 have the same internal configuration, the configuration of the refrigeration cycle 1 will be described in detail, and the refrigeration cycle 2 will be omitted.

In addition, the usage-side heat exchanger (which is evaporator at the time of cooling operation and a condenser at the time of heating operation) 4 of the refrigeration cycle 1 is provided on the upstream side of the cooling medium flow path 3 and the usage-side heat exchanger 5 of the refrigeration cycle 2 is provided on the downstream side thereof. Accordingly, in Example 3, the usage-side heat exchangers 4 and 5 of the refrigeration cycle 1 and the refrigeration cycle 2 are disposed in series with respect to the cooling medium flow path 3. In the example as well, although the usage-side heat exchangers of two refrigeration cycles are disposed in series with respect to one cooling medium flow path 3, only the usage-side heat exchanger of one refrigeration cycle may be disposed with respect to one cooling medium flow path 3, or the two refrigeration cycles may share one usage-side heat exchanger. Further, three or more refrigeration cycles may be provided and these usage-side heat exchangers may be disposed in series with respect to one cooling medium flow path 3, or three or more refrigeration cycles may share one usage-side heat exchanger.

Next, the internal configuration of the refrigeration cycle 1 described above will be described.

In Example 3, in order to perform not only the cooling operation but also the heating operation during the operation in the compressor operation cycle, in the configuration of the refrigeration cycle 1, as illustrated in Fig. 3, a compressor 10, a four-way valve 26, an air-side heat exchanger 11, an expansion valve 12, a usage-side (water side) heat exchanger 4, and an accumulator 27 are sequentially connected by a refrigerant pipe 6. In addition, a check valve 17 which prevents backflow of the refrigerant when the compressor is stopped is provided on the refrigerant pipe 6 on a discharge side of the compressor 10 and the four-way valve 26 is provided on a downstream side of the check valve 17. Accordingly, the compressor 10 is driven so that the cooling operation and heating operation can be performed by the compressor operation cycle.

In addition, an electromagnetic valve (first valve) 13A which is a two-way valve is provided between the air-side heat exchanger 11 and the expansion valve 12 in the present example, and a bypass circuit 15 for the pump operation cycle which bypasses the electromagnetic valve 13A and includes the refrigerant circulation pump 14 is provided. One end of the bypass circuit 15 for the pump operation cycle is connected to the refrigerant pipe 6 between the condenser 11 and the electromagnetic valve 13A and the other end thereof is connected to the refrigerant pipe 6 between the electromagnetic valve 13A and the expansion valve 12, respectively. In addition, a check valve 28 is provided on the outlet side of the refrigerant circulation pump 14 in the bypass circuit 15 for the pump operation cycle to allow flow only to the expansion valve 12 side.

On the other hand, the accumulator 27 is provided in the refrigerant pipe 6 on the suction side (upstream side) of the compressor 10. In addition, the accumulator 27 and the refrigerant pipe 6 on the downstream side (between check valve 17 and four-way valve 26) of the check valve 17 are connected to each other, and the compressor bypass circuit 18 is provided so as to bypass the compressor 10, and the compressor bypass circuit 18 is also provided with a check valve (second valve) 19 which prevents backflow of the refrigerant during operation of the compressor.

The accumulator 27 is provided with a heating heater 106 to prevent stagnation of the refrigerant staying in the accumulator 27 into the refrigerating machine oil during the pump operation cycle. In the present example, since the accumulator is provided, flow of refrigerant into the compressor 10 side can be suppressed during the pump operation cycle, and thus there is no need to provide the electromagnetic valve 16 on the upstream side of the compressor 10 as in Example 1. Therefore, since the pressure loss can be decreased during the operation in the compressor operation cycle, the efficiency can be improved.

During the heating operation, since the air-side heat exchanger 11 is an evaporator, the air-side heat exchanger 11 may be frosted, and although a defrosting operation is performed in order to remove the frost, the liquid returning to the compressor 10 side is likely to occur during the defrosting operation. By the accumulator 27 being provided, even if the amount of liquid returning to the compressor side increases, it can be collected in the accumulator 27 so that the liquid returning to the compressor 10 can be prevented and compressor failure or the like due to liquid compression can be prevented.

In addition, in the Example 3, although the refrigerant temperature detector 102 which detects the refrigerant temperature on the outlet side of the air-side heat exchanger 11 and the pressure sensor 103 which detects the refrigerant pressure on the outlet side of the air-side heat exchanger 11 are provided, the pressure sensor 23 on the high pressure side may be used instead of the pressure sensor 103. In addition, since the air-side heat exchanger 11 is normally provided with a thermistor (temperature detector) for defrosting, the thermistor may be used as a substitute of the refrigerant temperature detector 102. It is also possible to determine that whether or not gas is mixed in the refrigerant flowing through the outlet side of the air-side heat exchanger 11 from the refrigerant temperature detected by the thermistor and the pressure detected by the pressure sensor 23 on the high pressure side during the operation in the pump operation cycle using the pressure sensor 23 on the high pressure side and the thermistor. Therefore, in this case, the risk of failure due to the air inclusion operation or the like can be reduced in the refrigerant circulation pump 14 without providing the refrigerant temperature detector 102 and the pressure sensor 103 and thus the cost can be reduced.

In Fig. 3, reference numeral 29 is a liquid tank for adjusting the amount of refrigerant. Since other configurations are the same as those of Example 1 and Example 2 described above, the description thereof will be omitted. In addition, the refrigeration cycle 2 has the same configuration.

Next, the operation of the cooling apparatus illustrated in Fig. 3 will be described.

In a case where the compressor operation cycle is performed, the flow path of the high-temperature and highpressure refrigerant gas discharged from the compressor by driving the compressor 10 is selected by the four-way valve 26, and in a case of a cooling operation, the gas flows into the air-side heat exchanger 11 after passing through the four-way valve 26. In the air-side heat exchanger 11, the outdoor air blown by the blower 20 and the refrigerant exchange heat with each other, and the refrigerant is condensed to become liquid refrigerant.

During the compressor operation cycle, since the refrigerant circulation pump 14 is stopped and the electromagnetic valve (first valve) 13A is in the open state, the liquid refrigerant from the air-side heat exchanger 11 passes through the electromagnetic valve 13A, is decompressed and expanded by the expansion valve 12 to become a low-temperature and low-pressure two-phase refrigerant, and then flows into the usage-side heat exchanger 4.

On the other hand, the cooling medium which is cooled the load and rises in temperature flows into the usage-side heat exchanger 4 via the cooling medium flow path 3. In the usage-side heat exchanger 4, the refrigerant and the cooling medium exchange heat with each other so that the cooling medium is cooled by being deprived of heat by the refrigerant, the refrigerant evaporates to become refrigerant gas, passes through the four-way valve 26, the gas and liquid refrigerants are separated from each other by the accumulator 27, and then sucked into the compressor 10 again, and thus the refrigeration cycle operation is repeated.

In the present example, since the usage-side heat exchanger 4 uses a plate-type heat exchanger, the liquid refrigerant flows into the lower portion, gasifies and flows out from the upper portion. On the other hand, the cooling medium is configured to be countercurrent to the flow of the refrigerant during this cooling operation.

The refrigeration cycle 2 also operates similarly. In a case where the load is small, only one of the refrigeration cycles 1 and 2 may be operated, and the other thereof may be stopped.

In a case where the heating operation is performed in the compressor operation cycle, the high temperature and high pressure gas refrigerant discharged from the compressor 10 flows to the usage-side heat exchanger 4 side by the four-way valve 26. On the other hand, the cooling medium of which a temperature has decreased by heating the load flows into the usage-side heat exchanger 4 via the cooling medium flow path 3. In the usage-side heat exchanger 4, the refrigerant and the cooling medium exchange heat with each other, the cooling medium is heated by the high temperature refrigerant, the refrigerant is condensed to become liquid refrigerant, flows into the expansion valve 12, and then is decompressed and expanded to become a low temperature and low pressure two-phase refrigerant. Since the refrigerant circulation pump is stopped and the electromagnetic valve (first valve) 13A is in the open state, the low temperature and low pressure two-phase refrigerant passes through the electromagnetic valve 13A, and then flows into the air-side heat exchanger 11. In the air-side heat exchanger 11, the outdoor air blown by the blower 20 and the refrigerant exchange heat with each other, the refrigerant evaporates to become refrigerant gas, passes through the four-way valve 26, the gas and liquid refrigerants are separated from each other by the accumulator 27, and then is sucked into the compressor 10 again, and thus the refrigeration cycle operation is repeated.

The cooling apparatus of the present example is configured so as to perform the cooling operation by the pump operation cycle by driving the refrigerant circulation pump 14. In a case where this pump operation cycle is performed, it is operated in a case where the outside air temperature detected by the outside air temperature detector 32 is lower than the set temperature on the cooling medium outlet side. In a case where such a condition is satisfied, the compressor 10 is stopped as not a compressor operation cycle but a pump operation cycle.

During the operation in the pump operation cycle, the compressor 10 is in a stopped state, the electromagnetic valve (first valve) 13A is closed to be in a close state, and the refrigerant circulation pump 14 is driven. By closing the electromagnetic valve 13A, shortcut of the refrigerant is prevented. In the air-side heat exchanger 11, the low-temperature liquid refrigerant cooled and condensed by the outdoor air blown by the blower 20 and the refrigerant exchanging heat with each other is sucked to the refrigerant circulation pump 14 via the bypass circuit 15, is passed through the check valve 28 by the pump 14 to be sent to the expansion valve 12 side and then flows into the usage-side heat exchanger 4.

On the other hand, the cooling medium which is cooled the load and rises in temperature flows into the usage-side heat exchanger 4 via the cooling medium flow path 3. In the usage-side heat exchanger 4, the low-temperature liquid refrigerant and the cooling medium exchange heat with each other, the cooling medium is cooled by being deprived of heat by the refrigerant, and the cooled cooling medium is controlled to a target temperature.

The refrigerant evaporates by the usage-side heat exchanger 4 to become refrigerant gas, flows out from the usage-side heat exchanger 4, and flows into the accumulator 27 via the four-way valve 26. The refrigerant gas flowing into the accumulator 27 performs separation of gas and liquid of the refrigerant, only the gas refrigerant flows into the compressor bypass circuit 18, passes through the check valve 19, and then flows into the air-side heat exchanger 11 via the four-way valve 26 again. In the air-side heat exchanger 11, the refrigerant gas exchanges heat with the outdoor air again to condense, becomes a liquid refrigerant, and then flows into the refrigerant circulation pump 14 again, and thus the refrigeration cycle is repeated.

In the present example, since the accumulator 27 includes the heating heater 106, the refrigerant can be prevented from stagnating into the refrigerating machine oil staying in the accumulator 27.

In order to control the cooling medium cooled by the usage-side heat exchanger 4 to the target temperature, the refrigerant circulation pump 14 is configured to control the rotation speed by the inverter, and even under the operating condition of only the pump operation cycle, capacity can be controlled according to the target set temperature of the cooling medium.

In addition, in the pump operation cycle in the case where the outside air temperature is low, the refrigerant temperature exchanged heat in the condenser 11 is about the same as the outside air temperature, and in a case where water is used as the cooling medium, it is necessary to provide freezing protection in the evaporator 4 in the present example.

In the present example, as well, as in Example 1, the refrigerant temperature detector 101 is provided on the refrigerant inlet side of the usage-side heat exchanger 4, and according to the refrigerant temperature detected by the refrigerant temperature detector 101, the rotation speed of the blower 20 of the air-side heat exchanger 11 is controlled to prevent the cooling medium from freezing.

In addition, in the refrigerant circulation pump 14, it is necessary to reliably suck the liquid refrigerant, and it is necessary to reduce the risk of failure due to surging (air inclusion operation) or the like caused by gas mixing in the liquid refrigerant. Therefore, also in the present example, the refrigerant temperature detector 102 which detects the refrigerant temperature on the outlet side of the air-side heat exchanger 11 and the pressure sensor 103 which detects the pressure are provided, and the state of the refrigerant on the outlet side of the air-side heat exchanger 11 is determined from the detection value in each sensor by the control device or the like provided in the refrigeration cycle 1. If the refrigerant state determined by the control device is a gas rich, the control device controls not to operate the refrigerant circulation pump 14 or to stop the refrigerant circulation pump 14 if being in operation.

In addition, since it is necessary to suck the liquid refrigerant from the air-side heat exchanger 11 also at the time of the operation start or the like, at the time of the operation start, by the opening degree of the expansion valve 12 being decreased and resistance being generated, the liquid refrigerant may control to be collected from the air-side heat exchanger 11 and to make a trigger for sucking the liquid refrigerant of the refrigerant circulation pump 14.

Depending on the magnitude of the load, the refrigeration cycle 1 installed on the upstream side of the cooling medium flow path 3 is operated as a pump operation cycle, and the refrigeration cycle 2 installed on the downstream side of the cooling medium flow path 3 is operated as a compressor operation cycle. Accordingly, the supply temperature of the cooling medium can be stabilized and the energy saving of the pump operation cycle and the compressor operation cycle can be also enhanced.

Accordingly, the refrigeration cycle 1 on the upstream side and the refrigeration cycle 2 on the downstream side are used to properly select and switch according to the outside air temperature and the magnitude of the road so that the compressor operation cycle and the pump operation cycle can save energy and the cooling medium temperature can also quickly reach to the target temperature.

According to Example 3, the same effects as those of Example 1 and Example 2 can be obtained, and not only the cooling operation but also the heating operation are possible in the operation of the compressor operation cycle, and in addition, since the operation in the pump operation cycle is also possible, required and proper operation pattern can be selected by operating conditions, and it is possible to perform high efficient operation. In addition, during the operation in the pump operation cycle, there is an effect that the refrigerating machine oil in the refrigeration cycle can be recovered in the accumulator 27, whereby the refrigerating machine oil flowing into the air-side heat exchanger 11 and the usage-side heat exchangers 4 and 5 can be reduced and as a result, it is possible to suppress the deterioration of the heat transfer performance and operate efficiently.

It is more effective to provide the accumulator 27 as described in Example 3 also in the cooling apparatus of Example 1 and Example 2 described above.

The invention is not limited to the examples described above and includes various modification examples. In addition, a portion of the configuration of one example can be replaced by the configuration of another example, and the configuration of another example can be added to the configuration of one example.

In addition, the examples described above is described in detail in order to explain the present invention in an easy-to-understand manner, and are not necessarily limited to those having all the configurations described.

In addition, the control device provided in each of the refrigeration cycles 1 and 2 is not limited to be installed in each refrigeration cycle and may be provided in an external control device or the like. In addition, a plurality of control devices may be constituted by one control device or one microcomputer.

Information such as a program realizing each function, each determination value (threshold value) and each detected value can be stored in a recording device such as a memory, a hard disk, a solid state drive (SSD), or a recording medium such as an IC card, an SD card, a DVD, or the like.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A cooling apparatus, comprising:
a compressor (10), an air-side heat exchanger (11), an expansion valve (12), and a usage-side heat exchanger (5), which are sequentially connected by a refrigerant pipe (6);
a first valve (13) which is provided between the air-side heat exchanger (11) and the expansion valve (12);
a bypass circuit (15) for a pump operation cycle which bypasses the first valve (13) and which includes a refrigerant circulation pump (14);
a compressor bypass circuit (18) which bypasses the compressor; and
a second valve (19) which is provided in the compressor bypass circuit (18).

2. The cooling apparatus according to claim 1,
wherein a plurality of refrigeration cycles are provided which switch a compressor operation cycle which drives the compressor (10) and operates as a state where the first valve (13) is opened and a state where the second valve (19) is closed and a pump operation cycle which drives the refrigerant circulation pump (14) and operates as a state where the first valve (13) is closed and a state where the second valve (19) is opened, and
wherein the plurality of refrigeration cycles are disposed on an upstream side and a downstream side in a flow direction of a cooling medium, and the cooling medium flows into the usage-side heat exchanger (5) of the refrigeration cycle disposed on the upstream side to be cooled and then flows into the usage-side heat exchanger (5) of the refrigeration cycle disposed on the downstream side to be cooled.

3. The cooling apparatus according to claim 1, further comprising:
an outside air temperature detector (32) which detects an outside air temperature.

4. The cooling apparatus according to claim 1,
wherein the refrigerant circulation pump (14) is configured to be capable of controlling rotation speed and during an operation in the pump operation cycle, capacity control is performed by controlling the rotation speed of the refrigerant circulation pump (14) in accordance with a target set temperature of the cooling medium.

5. The cooling apparatus according to claim 1, further comprising:
a refrigerant temperature detector (32) which detects a refrigerant temperature on an outlet side of the air-side heat exchanger (11); and
a pressure sensor which detects refrigerant pressure on the outlet side of the air-side heat exchanger (11),
wherein it is determined that whether or not gas is mixed in the refrigerant flowing through the outlet side of the air-side heat exchanger (11) from the refrigerant temperature on the outlet side of the air-side heat exchanger (11) detected by the refrigerant temperature detector (32) and the pressure on the outlet side of the air-side heat exchanger (11) detected by the pressure sensor during the operation in the pump operation cycle, and at least one of the rotational speed of a blower which blows air to the air-side heat exchanger (11) and opening degree of the expansion valve (12) is controlled so as not to mix gas in the refrigerant.

6. The cooling apparatus according to claim 5,
wherein in a case where it is determined that gas is mixed in the refrigerant flowing through the outlet side of the air-side heat exchanger (11) from the refrigerant temperature on the outlet side of the air-side heat exchanger (11) detected by the refrigerant temperature detector (32) and the pressure on the outlet side of the air-side heat exchanger (11) detected by the pressure sensor, the operation of the refrigerant circulation pump (14) is controlled to be restricted.

7. The cooling apparatus according to claim 1,
wherein at operation start of the pump operation cycle, by opening degree of the expansion valve (12) being decreased and resistance being generated, a liquid refrigerant is controlled to be collected from the air-side heat exchanger (11) and to make a trigger for sucking the liquid refrigerant of the refrigerant circulation pump (14).

8. The cooling apparatus according to claim 1,
wherein a check valve which allows flow only to the air-side heat exchanger side is provided on a refrigerant pipe (6) on a discharge side of the compressor (10), a four-way valve (26) is provided on a downstream side of the check valve, and an accumulator (27) is further provided on a suction side of the compressor (10), and
wherein the compressor bypass circuit (18) connects the accumulator (27) and the refrigerant pipe (6) between the check valve on the discharge side of the compressor (10) and the four-way valve (26), and a heating heater is provided on the accumulator (27).

9. The cooling apparatus according to claim 1,
wherein, in a case where the operation capacity is insufficient only by the pump operation cycle while the plurality of refrigeration cycles are operated in the pump operation cycle, the refrigeration cycle disposed on the upstream side is operated as the pump operation cycle, and the refrigeration cycle disposed on the downstream side is operated as a compressor operation cycle.

10. The cooling apparatus according to claim 1, further comprising:
a temperature detector (101) for detecting a temperature of a refrigerating machine oil in an inside portion of the compressor; and
a heating heater which controls so as to increase the temperature of the refrigerating machine oil in the inside portion of the compressor (10) based on the temperature detected by the temperature detector (101),
wherein the cooling apparatus (1) is configured to switch a compressor operation cycle which drives the compressor (10) and operates as a state where the first valve (13) is opened and a state where the second valve (19) is closed and a pump operation cycle which drives the refrigerant circulation pump (14) and operates as a state where the first valve (13) is closed and a state where the second valve (19) is opened, and
wherein the cooling apparatus is configured to gasify a liquid refrigerant in the inside portion of the compressor (10) by controlling the heating heater based on the temperature of the refrigerating machine oil detected by the temperature detector (101) during an operation in the pump operation cycle.

11. The cooling apparatus according to claim 1, further comprising:
a blower (20) for blowing air to the air-side heat exchanger (11); and
a refrigerant temperature detector (101) for detecting a refrigerant inlet-side temperature to the usage-side heat exchanger (5),
wherein the cooling apparatus is configured to switch a compressor operation cycle which drives the compressor (10) and operates as a state where the first valve (13) is opened and a state where the second valve (19) is closed and a pump operation cycle which drives the refrigerant circulation pump (14) and operates as a state where the first valve (13) is closed and a state where the second valve (19) is opened, and
wherein the cooling apparatus is configured to prevent freezing of a cooling medium flowing through the usage-side heat exchanger (5) by controlling the blower (20) which blows air to the air-side heat exchanger (11) based on a refrigerant temperature on the inlet side of the usage-side heat exchanger (5) detected by the refrigerant temperature detector (101) during an operation in the pump operation cycle.
